# EUROPEAN PATENT APPLICATION

(11) **EP 3 770 030 A1**
(43) Date of publication of application: **27.01.2021**
(21) Application number: 18911090.1
(22) Date of filing: 22.06.2018
(51) Int. Cl.: B60S 5/06, B08B 1/02, B08B 15/00, B65G 1/02

(54) **STORAGE UNIT FOR BATTERY, BATTERY RACK AND BATTERY SWAPPING STATION**

(30) Priority: 20.03.2018 CN 201810229386
(71) Applicant: NIO (ANHUI) HOLDING CO., LTD, Economic and Technological Development Zone Hefei Anhui 230601 (CN)
(72) Inventor: HAO, Zhanduo, Hong Kong (CN)
(74) Representative: Vossius & Partner Patentanwälte Rechtsanwälte mbB
(86) International application number: PCT/CN2018/092451
(87) International publication number: WO 2019/178963

(57) **Abstract**

Disclosed is a storage unit for a battery, comprising: a body (1) for storing the battery (5); a conveying part (2) provided on the body (1) and defining a conveying path, the battery moving along the conveying path relative to the body (1); and a cleaning device (3) provided on the body (1), the conveying part (2) being adjacent to the cleaning device (3) and used to clean the battery passing through the position where the cleaning device (3) is located on the body. The storage unit can clean the battery part stored in the storage unit. A battery rack and a swap station comprising the storage unit are also disclosed.

## Description

### Technical Field

The invention belongs to the field of charging services, and specifically relates to a storage unit and a battery rack for a battery, and a battery swap station provided with the storage unit and/or the battery rack.

### Background Art

Battery swap is currently the fastest way to replenish electric vehicles with power, and the best battery swap mode for passenger vehicles is chassis-type swap. For the convenience of battery swap, the battery is exposed and installed at the bottom of the vehicle, that is, a bottom surface of the traction battery faces the ground, and dirt on the bottom surface will be accumulated on the bottom surface of the traction battery to varying degrees during the driving of the vehicle.

In addition, important components and interfaces are provided on the top of the traction battery. However, the traction battery is stored in a battery swap station having a stacked structure during storage. A top surface of the traction battery is exposed to the outside. Once dirt and sewage enter these components and interfaces, they will bring great safety hazards to the traction battery.

### Summary of the Invention

One aspect of the invention is to provide a storage unit for a battery, the storage unit comprising:
a body for storing the battery;
a conveying part, the conveying part being provided on the body and defining a conveying path, the conveying part being arranged adjacent to the cleaning device, and the battery moving along the conveying path relative to the body; and
a cleaning device, the cleaning device being provided on the body, and used to clean the battery passing through the position where the cleaning device is located on the body.

In the above storage unit, the conveying part and the cleaning device are distributed on the top of the body.

In the above storage unit, the conveying path defines a path in a first direction, and the cleaning device is arranged in a second direction crossing the first direction.

In the above storage unit, the cleaning device is provided as a cleaning strip extending in the second direction and made of a flexible material.

In the above storage unit, the conveying path comprising a shared path in which the battery is moved into and out of the body.

In the above storage unit, the cleaning device is configured to perform active cleaning or passive cleaning on the battery, and in an event that the cleaning device is performing the passive cleaning, the cleaning device stops working when the conveying part stops working.

In the above storage unit, the cleaning device comprises a cleaning tool, which is in contact with the battery, and a receiving part, and the cleaning tool is removably provided in the receiving part.

The above storage unit further comprises a collection part for receiving dirt, wherein the collection part is provided on the body, the collection part comprises collection ports and a tray in communication with the collection ports, and the tray is configured to be drawable out of the body.

In the above storage unit, the collection ports are arranged adjacent to the cleaning device, and the tray is located at the bottom of the body to separate an internal space of the body from the outside.

A further aspect of the invention is to provide a battery rack, comprising at least two storage units according to any one described above, which are arranged in a height direction.

A yet further aspect of the invention is to provide a battery swap station comprising the storage unit and/or the battery rack described above.

The storage unit is equipped with a cleaning device, and the cleaning device cleans the part of the battery passing through the cleaning device when the battery enters or exits the storage unit. There is no need for additional cleaning tools and cleaning steps.

The cleaning device of the invention does not need additional power, does not increase the complexity of the storage unit, and is stable and reliable. The cleaning strip of the cleaning device of the invention that is in contact with the bottom surface of the battery is made of a soft material and will not damage the bottom surface of the battery. The cleaning device of the invention can be conveniently replaced after long-term use and wear, has low costs and is easy to popularize. The collection part of the invention collects the dirt removed by the cleaning device and the dirt that has not been thoroughly cleaned by the cleaning device. The tray is used as a physical separation to effectively prevent the dirt, the sewage, etc. from the bottom surface of the upper battery from polluting the lower battery. The tray is movable and can be easily drawn out, which is convenient for regular cleaning of the collected dirt and is convenient to operate.

The invention solves the problems of the dirt and the sewage from the bottom surface of the traction battery exchanged from the vehicle in the battery swap station. When the battery enters and exits the storage unit, the bottom surface of the battery is cleaned, and the dirt, the sewage, etc. will be collected, and then cleaned regularly by the staff to prevent the dirt, the sewage, etc. from the bottom surface of the upper battery from directly falling onto the top of the lower traction battery, thereby effectively protecting electrical connectors and cooling interfaces of the traction battery from being polluted, reducing the safety hazards of the traction battery and improving the operating efficiency of the battery swap station.

Other aspects and features of the invention will become apparent from the following detailed description with reference to accompanying drawings. However, it should be understood that the accompanying drawings are designed for the purpose of explanation only and are not intended to limit the scope of the invention, as they should refer to the appended claims. It should also be understood that the accompanying drawings are only intended to conceptually illustrate the structures and processes described herein and are not necessarily drawn to scale unless otherwise indicated.

### Brief Description of the Drawings

The invention will be more fully understood by referring to the following detailed description of specific embodiments in conjunction with the accompanying drawings, in which like reference numerals refer to like elements throughout the figures. In the figures:
Fig. 1 is a structural schematic diagram of a storage unit according to the invention;
Fig. 2 is a schematic diagram of a state in which a battery is moved into the storage unit;
Fig. 3 is a schematic diagram of a state in which the battery is moved out of the storage unit;
Fig. 4 is a structural schematic diagram of a cleaning device in the storage unit according to the invention; and
Fig. 5 is a partial schematic diagram of a battery swap station according to the invention.

### Detailed Description of Embodiments

In order to help those skilled in the art to accurately understand the claimed subject matter of the invention, specific embodiments of the invention will be described in detail below with reference to the accompanying drawings.

A storage unit according to the invention is used for receiving and storing a battery, especially for receiving and storing a traction battery from an electric vehicle. The storage unit may receive and store a used battery to be charged, or may store and provide a fresh battery that has been charged. A battery rack according to the invention comprises a plurality of storage units, which are stacked one above the other to from the battery rack. A battery swap station according to the invention is constructed by the above-mentioned storage units and/or battery rack in a certain arrangement. The used battery may be conveyed to the storage unit of the battery swap station to wait for charging, and the swapped battery is conveyed out of the battery swap station.

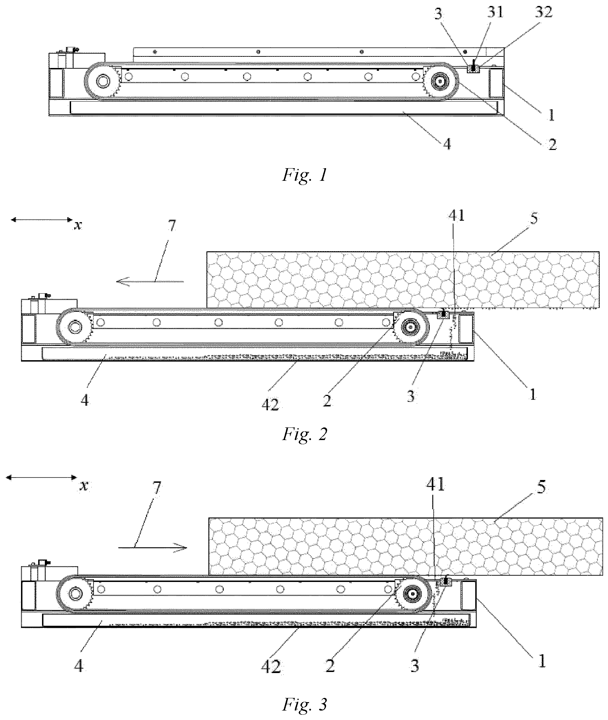

Fig. 1 is a structural schematic diagram of a storage unit for a battery according to the invention. Referring to Fig. 1, the storage unit comprises a body 1, a conveying part 2, a cleaning device 3 and a collection part 4. The body 1 is a frame structure for a storage unit, and may receive a battery moved therein, or the battery is moved out of the body. The conveying part 2 is provided on the body 1 and defines a conveying path, and the battery moves along the conveying path relative to the body 1. The conveying part 2 may be a belt drive, a chain drive, or a roller drive or other devices for conveying the battery. The conveying part 2 may be power-driven, such as being driven by an electric motor, or may be non-power driven, such as by using another transportation apparatus or manpower to convey or pull the battery into or out of the body. When the battery is a battery panel with a relatively large area, the conveying part 2 is generally composed of at least two belt drives (in Fig. 1, one belt drive is shown, and the other belt drive is blocked thereby and is therefore not visible). The conveying path defined by the conveying part helps to move the battery into or out of the body. When the battery is moved into the body 1 in place, the conveying part 2 stops working, and the battery may be borne on the conveying part 2 to wait for charging.

The cleaning device 3 is provided on body 1, and the moving battery will pass through the cleaning device 3, such that the battery passing through the position where the cleaning device 3 is located on the body can be cleaned. The cleaning device 3 is integrated on the body 1 instead of being provided separately from the body 1, and the cleaning device 3 can perform cleaning work on the moving battery. In other words, the battery is cleaned while entering or exiting the storage unit, without the need for additional cleaning tools and additional cleaning procedures. The collection part 4 is also provided on body 1 and receives dirt detached from the battery, including dirt removed from the battery by the cleaning device and/or dirt dropped from the battery.

The conveying part 2 and the cleaning device 3 are distributed on the top of the body 1. The advantage of this arrangement is that the conveying part 2 and the cleaning device 3 are both in contact with the bottom of the battery. After the battery is installed on the vehicle, the bottom is directly exposed to the outside and therefore will suffer more pollution and sewage. If the conveying part 2 and the cleaning device 3 are arranged on the top of the storage unit, the cleaning device 3 can directly clean the bottom surface of the dirty battery after the battery enters the storage unit.

The cleaning device 3 may be configured to be arranged in a direction crossing the conveying path 7. In the embodiment shown in Figs. 2 and 3, the battery is moved into or out of the body in a first direction x, and the cleaning device 3 is arranged in a second direction perpendicular to the first direction x (in the illustrated embodiment, the second direction is a direction passing through the plane of the drawing). Of course, the second direction may also be a direction inclined to the first direction. The cleaning device 3 may be a cleaning strip arranged in the second direction. The cleaning strip extends in the second direction and is made of a flexible material that would not damage the bottom surface of the battery 5. For example, and without limitation, the cleaning strip is a brush strip, a sponge strip, a soft steel wire strip, etc. The cleaning strip is configured to expose the frame structure of the body. The cleaning strip is in contact with the bottom surface of the battery 5 when the battery 5 passes by, and the dirty and the sewage at the bottom of the battery 5 is detached by friction, and fall into the collection part 4 and are collected. When the cleaning device 3 stops working, the sewage and ice melt water from the bottom of the battery 5 that have not been completely removed will also drip into the collection part 4 and be collected.

The conveying part 2 may rotate in a forward direction to move the battery 5 into the body 1 or rotate in a reverse direction to move the battery 5 out of the body 1. The conveying path 7 comprises a path for moving the battery 5 into the body 1 and a shared path for moving the battery 5 out of the body 1, that is, the battery 5 can either enter the body 1 in one direction or be moved out of the body 1 in the opposite direction. Therefore, the battery 5 passes through the cleaning device 3 twice during moving in and out, and the cleaning device 3 can clean the battery 5 twice. As shown in the figure, the cleaning device 3 may be arranged close to the side of the body 1 that receives the battery from the outside (the cleaning device 3 is close to the right side of the body 1 in the figure). In other words, when viewed from the direction in which the battery 5 is moved in, as shown in Fig. 2, the cleaning device 3 is arranged adjacent to the conveying part 2. After the battery 5 enters the body 1, it passes through the cleaning device 3 and is then transported to the conveying part 2. Alternatively, as shown in Fig. 3, when viewed from the direction in which the battery 5 is moved out, the battery 5 exits the body 1 from the conveying part 2 through the cleaning device 3.

The cleaning device 3 may perform active cleaning or passive cleaning. In the active cleaning mode, the cleaning device has its own drive mechanism, and is driven to work by the drive mechanism or stops working. In the passive cleaning mode, the cleaning device does not need additional power, and the battery is cleaned by the cleaning device through the movement of the battery. When the battery stops moving, the conveying part stops working at this time, so that the cleaning device also stops cleaning the battery. In this working mode, the provision of the driving mechanism is omitted, and the structure is simplified.

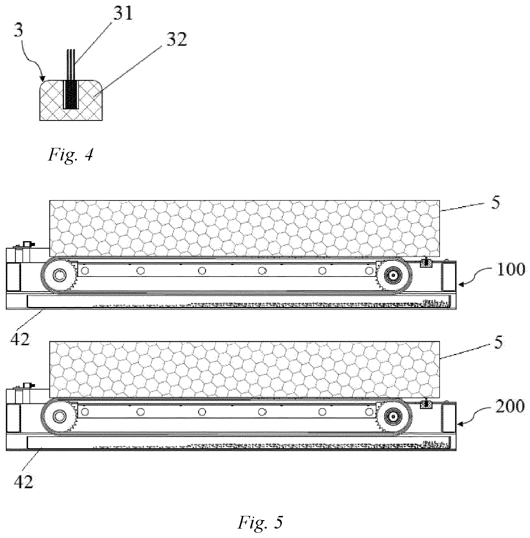

The cleaning device 3 comprises a cleaning tool 31 and a receiving part 32, and the cleaning tool 31 can be removed from the receiving part 32. Referring to Fig. 4, in the combined cleaning device shown in the figure, the receiving part 32 is an elongated groove. The groove may be fixed to the top of the body. The cleaning tool 31 is a brush strip received in the groove. The brush strip can be detached, and is very convenient for replacement. In this way, when the brush strip is worn out after multiple use, the cleaning device can be reused by replacing a new brush strip.

The collection part 4 comprises collection ports 41 and a collection tool in communication with the collection port 41. The dirt detached from the battery falls into the collection tool from the collection ports 41. In the embodiment shown in the figure, the collection ports 41 are located on the top of the body 1 and close to the cleaning device 3. In this way, the dirt removed by the cleaning device 3 and the sewage, ice melt water, etc. that have not been completely removed by the cleaning device can be collected in the collection ports 41. In Figs. 2 and 3, it can be seen that the collection ports 41 are distributed on two sides of the cleaning device 3. Specifically, when the battery 5 is moved into the body 1, the removed dirt falls from the collection port 41 on the side (right side) of the cleaning device 3. When the battery 5 is moved out of the body 1, the removed dirt falls from the collection port 41 on the side (left side) of the cleaning device 3. The collection tool is a tray 42. The tray 42 can be drawn out of the body 1. The tray 42 is located at the bottom of the body 1 and serves as a separation between the internal space of the body 1 and the outside. The dirt collected through the collection ports 41 is accumulated in the tray 42, which can be regularly drawn out of the tray 42 for cleaning. The area of the tray 42 can cover the entire battery 5. In this way, when a plurality of storage units are arranged in the height direction to construct a battery rack, as shown in Fig. 5, the battery rack is a multi-layered structure composed of storage units 100, 200, and the tray 42 on each storage unit 100, 200 is a physical separator, which effectively prevents dirt in the upper storage unit 100 from falling onto the lower storage unit 200. Generally, important components and interfaces such as electrical connectors and cooling interfaces are provided on the top surface of the battery 5 to keep these components and interfaces from being contaminated, so as to maintain the operating performance of the battery 5, thereby prolonging the service life of the battery 5. If there is no collection tool provided between the storage units 100, 200, the dirt from the battery 5 on the upper storage unit 100 is likely to fall onto the top surface of the battery 5 of the lower storage unit 200, which is undesirable. Therefore, the provision of a collection tool, such as the tray 42 shown in the figure, at the bottom of the storage unit 100, 200 can not only collect the dirt from the battery 5 of the upper storage unit 100, but can also prevent the dirt from falling onto the battery 5 of the lower storage unit 200, and thus the cleanliness of the battery 5 is effectively ensured.

Although specific embodiments of the invention have been shown and described in detail to illustrate the principles of the invention, it should be understood that the invention may be implemented in other ways without departing from such principles.

## Claims

1. A storage unit for a battery, **characterized by** comprising:
a body (1) for storing the battery;
a conveying part (2), the conveying part (2) being provided on the body (1) and defining a conveying path, the battery moving along the conveying path relative to the body (1); and
a cleaning device (3), the cleaning device (3) being provided on the body (1), and the conveying part (2) being adjacent to the cleaning device (3) and used to clean the battery passing through the position where the cleaning device (1) is located on the body.

2. The storage unit according to claim 1, **characterized in that** the conveying part (2) and the cleaning device (3) are distributed on the top of the body (1), and the conveying path comprising a shared path in which the battery is moved into and out of the body (1).

3. The storage unit according to claim 1, **characterized in that** the conveying path defines a path in a first direction (x), and the cleaning device (3) is arranged in a second direction crossing the first direction (x).

4. The storage unit according to claim 3, **characterized in that** the cleaning device (3) is provided as a cleaning strip extending in the second direction and made of a flexible material.

5. The storage unit according to any one of claim 1-4, **characterized in that** the cleaning device (3) is configured to perform active cleaning or passive cleaning on the battery, and in an event that the cleaning device (3) is performing the passive cleaning, the cleaning device (3) stops working when the conveying part (2) stops working.

6. The storage unit according to any one of claim 1-4, **characterized in that** the cleaning device (3) comprises a cleaning tool (31), which is in contact with the battery, and a receiving part (32), and the cleaning tool (31) is removably provided in the receiving part (32).

7. The storage unit according to any one of claim 1-4, **characterized by** further comprising a collection part (4) for receiving dirt, wherein the collection part (4) is provided on the body (1), the collection part (4) comprises collection ports (41) and a tray (42) in communication with the collection ports (41), and the tray (42) is configured to be drawable out of the body (1).

8. The storage unit according to claim 7, **characterized in that** the collection ports (41) are arranged adjacent to the cleaning device (3), and the tray (42) is located at the bottom of the body (1) to separate an internal space of the body (1) from the outside.

9. A battery rack, **characterized by** comprising at least two storage units according to any one of claim 1-8, which are arranged in a height direction.

10. A battery swap station, **characterized by** comprising a storage unit according to any one of claim 1-8 and/or a battery rack according to claim 9.
